# EUROPÄISCHE PATENTSCHRIFT

(11) **EP 4 335 532 B1**
(45) Veröffentlichungstag und Bekanntmachung des Hinweises auf die Patenterteilung: **06.08.2025**
(21) Anmeldenummer: 23195778.8
(22) Anmeldetag: 06.09.2023
(51) Int. Cl.: B01D 29/11, B01D 46/24

(54) **FILTERELEMENT UND FILTEREINRICHTUNG**
FILTER ELEMENT AND FILTER DEVICE
ÉLÉMENT FILTRANT ET DISPOSITIF FILTRANT

(30) Priorität: 07.09.2022 DE 102022209325
(43) Veröffentlichungstag der Anmeldung: 13.03.2024
(73) Patentinhaber: Filtration Group GmbH, 74613 Öhringen (DE)
(72) Erfinder: DONAT, Elias, 74613 Öhringen (DE); KNANDEL, Thomas, 74613 Öhringen (DE); GAUGLER, Thomas, 74613 Öhringen (DE); SHAMS, Khadija, 74072 Heilbronn (DE)
(74) Vertreter: BRP Renaud & Partner mbB Rechtsanwälte Patentanwälte Steuerberater

(56) Entgegenhaltungen:
- EP-A1- 0 880 987
- DE-A1- 102015 005 136
- DE-A1- 2 710 894
- US-A1- 2013 206 680
- US-A1- 2013 327 696

## Beschreibung

Die Erfindung betrifft ein Filterelement für eine Filtereinrichtung sowie eine Filtereinrichtung zum Filtern eines Fluids, insbesondere einer Flüssigkeit, mit einem solchen Filterelement.

Eine gattungsgemäße Filtereinrichtung ist beispielsweise aus der DE 10 2010 005 978 A1 bekannt.

US 2013/206680 A1 offenbart eine Wechselfiltereinheit mit einem Filterelement und einem das Filterelement aufnehmenden Gehäuse. Das Filterelement umfasst eine Endscheibe mit mehreren Rippen mit jeweils einer Rampe und Hacken, sodass das Filterelement an dem Gehäuse positionierbar ist.

US 2013/327696 A1 offenbart ein Filterelement mit einem Filterkörper und zwei Endscheiben. An einer der Endscheiben sind mehrere Rippen ausgebildet, die Durchflusswege für sauberes Fluid und für verschmutztes Fluid ausbilden können.

DE 27 10 894 A1 offenbart ein Filterelement mit einem ringförmigen Filterkörper und zwei Endscheiben. An einer der Endscheiben sind mehrere Rippen ausgebildet, die an einem Aufnahmestutzen dichtend anliegen.

DE 10 2015 005 136 A1 offenbart eine Filtervorrichtung mit einem Filterelement. Das Filterelement umfasst dabei einen Filterkörper und zwei Endscheiben. Dabei wiest eine der Endscheiben radiale Rippen auf, die als Leitflügel zur Homogenisierung der Strömung beitragen.

EP 0 880 987 A1 offenbart eine Wechselfiltereinheit mit einem Filterelement. Das Filterelement umfasst einen Filterkörper und zwei Endscheiben, an denen radiale Rippen ausgebildet sind. Die Rippen bilden insbesondere einen Strömungsweg für einen Bypass-Fluidstrom und halten das Filterelement in einem Gehäusebehälter. Eine derartige Filtereinrichtung umfasst eine Konsole - dem Fachmann auch unter der Bezeichnung "Filterkopf" bekannt - ein Gehäuse und ein Filterelement und besitzt im montierten Zustand eine hängende oder stehende Anordnung. Die Konsole kann insbesondere bei einer hängenden Anordnung auch als Filterkopf bezeichnet werden und weist einen rohseitigen Zulauf und einen reinseitigen Ablauf auf, wobei eine Zulauföffnung des Zulaufs und eine Ablauföffnung des Ablaufs im montierten Zustand der Filtereinrichtung aufgrund der hängenden Anordnung nach unten offen sind. Das Gehäuse ist lösbar an der Konsole befestigt und enthält einen Aufnahmeraum. Das Gehäuse schließt im montierten Zustand der Filtereinrichtung aufgrund der hängenden Anordnung nach unten an die Konsole an, sodass sich der Aufnahmeraum unterhalb der Konsole befindet. Das Filterelement ist austauschbar im Aufnahmeraum angeordnet und trennt darin eine mit dem Zulauf fluidisch verbundene Rohseite von einer mit dem Ablauf fluidisch verbundenen Reinseite. Im montierten Zustand der Filtereinrichtung ist das Filterelement von unten an der Konsole lösbar festgelegt. Das Filterelement weist außerdem einen ringförmigen Filterkörper auf, der eine Mittellängsachse definiert und der zum Filtern des Fluids von dem Fluid radial durchströmbar ist. Der Ablauf weist an der Konsole einen Aufnahmestutzen auf, der die Ablauföffnung besitzt und der vorzugsweise konzentrisch zur Mittellängsachse angeordnet ist. Das Filterelement weist eine offene obere Endscheibe auf, die ein der Konsole zugewandtes oberes axiales Ende des Filterkörpers abdichtet und die eine zentrale Scheibenöffnung aufweist, die vom Aufnahmestutzen durchsetzt ist. Des Weiteren ist eine Stutzendichtung vorgesehen, die den Aufnahmestutzen gegenüber der oberen Endscheibe dichtet.

Bei einer hängenden Anordnung ist die Konsole oben angeordnet und das Fluid wird von oben dem Aufnahmeraum zugeführt und nach oben vom Aufnahmeraum abgeführt. Das Filterelement schließt nach unten an die Konsole an, sodass es quasi an der Konsole hängt. Das in der Regel topfförmige Gehäuse schließt ebenfalls von unten an die Konsole an und nimmt dabei das Filterelement auf. Im Unterschied dazu ist bei einer stehenden Anordnung die Konsole unten angeordnet und das Fluidwird von unten zugeführt und nach unten abgeführt. Das Filterelement schließt nach oben an die Konsole an, so dass es quasi auf der Konsole steht. Der Aufnahmeraum kann bei einer stehenden Anordnung in der Konsole und/oder im Gehäuse ausgebildet sein. Das Gehäuse bildet in der Regel einen Deckel und schließt nach oben an die Konsole an. Die relativen Ortsangaben "oben" und "unten" beziehen sich dabei auf die Schwerkraftrichtung, die nach unten weist. Im montierten Zustand der Filtereinrichtung kann der Zulauf über eine Pumpe mit einem Reservoir verbunden sein, wohingegen der Ablauf zu Verbrauchern des Fluids führt, von denen ggf. ein Rücklauf wieder zum Reservoir führt.

Beim Montieren des Filterelements wird das Filterelement mit der oberen Endscheibe auf den Aufnahmestutzen aufgesteckt. Dabei wird die Stutzendichtung radial verpresst, um die Dichtungswirkung zu erzeugen. Dadurch erzeugt die Stutzendichtung zwischen dem Aufnahmestutzen und der oberen Endscheibe eine axiale Stutzenhaltekraft, die einem Abziehen des Filterelements vom Aufnahmestutzen entgegenwirkt.

Als problematisch bei solchen herkömmlichen Filtereinrichtungen erweist sich, dass sich das Filterelement im Betrieb an der Konsole "festsetzt", was das Lösen des Filterelementes beim Filterwechsel nur unter hohem Kraftaufwand ermöglicht; denn bedingt durch die Pressung der Stutzendichtung zur vollständigen Abdichtung der Endscheibe gegen die Konsole kann es zu Verklebungen des Filterelementes mit dem Filterkopf oder zu vergleichbaren Effekten kommen. Es kommt somit an der zylindrischen Kontaktfläche der Endscheibe sowie der Konsole mit dem O-Ring durch das Medium zu einem Verkleben. Neben dem Verkleben kann es zudem zu einem Aufquellen der O-Ring-Dichtung kommen. Ein derartiges Quellen der Dichtung erhöht die resultierenden Klemmkräfte, welche bei der Demontage des Filterelementes zusätzlich überwunden werden müssen. Die Summe der Verklebungs- und Klemmkräfte müssen daher für die Demontage des gebrauchten Filterelementes beim Filterelementwechsel überwunden werden, was die Demontage deutlich erschwert.

Aufgrund der zylindrischen Kontaktfläche zwischen Aufnahmestutzen der Konsole und offener Endscheibe des Filterelementes mit geringem Spaltmaß, ist ein "Heraushebeln" des verklebten Filterelementes aufgrund der nur in einem geringen Winkelspiel ausführbaren Hebelbewegung nur bedingt möglich. Nahezu die gesamten Klemm- und Verklebungskräfte müssen somit durch ein aufgebrachtes Torsionsmoment, eine axiale Kraft oder eine Kombination aus beidem überwunden werden. Gerade in räumlich beengten Einbausituationen kann dies erhebliche Schwierigkeiten mit sich führen und gar in Verletzungsgefahren resultieren.

Dieser Nachteil kann nicht durch eine Anpassung der Auslegung der Stutzendichtung ausgeräumt werden, da dies die erzielte Dichtungswirkung mindern oder, im Extremfall, gar außer Funktion setzen würde.

Die vorliegende Erfindung beschäftigt sich daher mit dem Problem, für eine Filtereinrichtung sowie für deren Filterelement eine verbesserte oder zumindest eine andere Ausführungsform zu schaffen, die sich insbesondere durch eine vereinfachte Demontierbarkeit des Filterelements von einer Konsole der Filtereinrichtung auszeichnet.

Diese Aufgabe wird durch den Gegenstand der unabhängigen Patentansprüche gelöst. Bevorzugte Ausführungsformen sind Gegenstand der abhängigen Patentansprüche.

Grundidee der Erfindung ist demnach, an der oberen Endscheibe eines Filterelements eine Rippenstruktur - im Folgenden als "Endscheiben-Rippenstruktur" bezeichnet - mit mehreren entlang der Umfangsrichtung aufeinanderfolgenden Rippen - im Folgenden als "Halterungsrippen" bezeichnet auszubilden. Dies erlaubt die Montage an einer ebenfalls mit Rippen ausgestatteten Endscheiben-Halterung ,welche in der Konsole des Filters fest montiert vorliegt, derart, dass die Mittellängsachsen von Endscheiben-Halterung und Filterelement mit oberer Endscheibe in einem nominellen Betriebszustand der Filtereinrichtung mit dem Filterelement koaxial oder zumindest parallel zueinander angeordnet sind, aber in beiden Varianten auch bis zu einem vorgegebenen Maximal-Winkel gegeneinander verkippt werden können. Hierfür kann neben der Einführung der Endscheiben-Rippenstruktur sowie der Integration der Endscheiben-Halterung in der Konsole der Filtereinrichtung eine konische Ausführung des Aufnahmestutzens realisiert sein. Dies maximiert das mögliche Winkelspiel, in welchem das Filterelement aus seiner zur Mittellängsachsen der Endscheiben-Halterung koaxialen Position "gekippt/gehebelt" werden kann. Dadurch kann das Filterelement zur Demontage von der Konsole quasi aus seiner nominellen Montageposition "gehebelt" werden. Die Verkippbarkeit erleichtert dabei in erheblichem Maße die Demontage des Filterelements von der Konsole der Filtereinrichtung. Die Endscheiben-Rippenstruktur sowie die mit dieser korrespondierenden Endscheibenhalterung erzeugt definierte Kipppunkte, an welchen bei einer Kipp-/Hebelbewegung des Filterelementes ein möglichst reibungsarmes "Abrollen" der Halterungsrippen der oberen Endscheibe an der fest in der Konsole verbauten Endscheiben-Halterung ermöglicht wird. Dies senkt die für die Demontage zu überwindenden Kräfte zusätzlich.

Im Einzelnen umfasst ein erfindungsgemäßes Filterelement für eine Filtereinrichtung einen, vorzugsweise ringförmigen, Filterkörper aus Filtermaterial, der eine Filterelement-Mittellängsachse aufweist und der zum Filtern eines Fluids, insbesondere einer Flüssigkeit, von dieser radial von außen nach innen oder, alternativ dazu, von innen nach außen durchströmbar ist.

Unter dem Begriff "ringförmig" sind im Zusammenhang mit der hier vorgestellten Erfindung jedwede Geometrien gefasst, bei welchen das betreffende Bauteil um eine Durchgangsöffnung vollständig umläuft diese somit einfasst. Besonders bevorzugte ringförmige Geometrien des jeweiligen Bauteils sind vorliegend runde, insbesondere kreisrunde, aber auch elliptische Geometrien sowie polygon-artige Geometrien.

Ferner umfasst das Filterelement erfindungsgemäß eine ringförmige, also offene obere Endscheibe, die ein vom Filterkörper abgewandtes oberes axiales Ende des Filterelements abdichtet und eine zentrale Scheibenöffnung aufweist. Diese Scheibenöffnung kann von einem Aufnahmestutzen der Filtereinrichtung durchsetzt werden. Weiterhin ist eine Stutzendichtung zum Abdichten der oberen Endscheibe gegen den Aufnahmestutzen vorgesehen. Erfindungsgemäß ist an der oberen Endscheibe eine Endscheiben-Rippenstruktur vorgesehen, mittels welcher das Filterelement im montierten Zustand an einer am Aufnahmestutzen vorgesehenen Endscheiben-Halterung angeordnet werden kann.

Die Endscheiben-Rippenstruktur ist erfindungsgemäß auf einer vom Filterkörper abgewandten Oberseite der oberen Endscheibe angeordnet und umfasst mehrere in der Umfangsrichtung im Abstand zueinander angeordnete und jeweils axial nach oben von der Endscheibe abstehende Rippen. In einem Längsschnitt entlang der Filterelement-Mittellängsachse weist eine von der Unterseite der Endscheibe abgewandte Oberseite wenigstens einer, vorzugsweise aller, der Rippen eine Kontur auf, deren axialer Abstand zur Unterseite von radial innen nach radial außen abnimmt. Vorzugsweise weisen mehrere Rippen, besonders bevorzugt alle Rippen, eine derart ausgebildete Kontur auf. Eine derartige Kontur erlaubt bei entsprechender Ausgestaltung des "Gegenspielers" an der Konsole das gewünschte Verkippen des Filterelements relativ zur Konsole, so dass dieses zur Demontage ausgehebelt werden kann.

Die Endscheiben-Rippenstruktur kann integral an der oberen Endscheibe ausgeformt sein, d.h. die Endscheiben-Rippenstruktur und die oberen Endscheibe sind einstückig und materialeinheitlich ausgebildet. Alternativ dazu kann die Endscheiben-Rippenstruktur separat zur Endscheibe ausgebildet und, beispielsweise stoffschlüssig, insbesondere mittels einer Klebverbindung, fest mit dieser verbunden sein. Alternativ dazu vorstellbar ist aber auch eine lösbare Verbindung, insbesondere in Form einer Steck- oder Clipverbindung.

Erfindungsgemäß ist zwischen jeweils zwei in Umfangsrichtung des Filterelements benachbarten Rippen der Endscheiben-Rippenstruktur eine Vertiefung zur Aufnahme einer jeweiligen an einer Konsole der Filtereinrichtung vorhandenen Halterungsrippe vorgesehen. Dabei weist in dem Querschnitt entlang der Längsrichtung eine von der Endscheibe abgewandte Oberseite der Vertiefung eine konvexe Kontur auf. Ein axialer Abstand dieser Kontur zu einer Unterseite der Endscheibe ist in einem Kontaktpunkt minimal. Eine derart ausgebildete Kontur ermöglicht die Ausbildung von definierten Kontakt- bzw. Drehpunkten zwischen Filterelement und Konsole zum Verkippen des Filterelements gegenüber der Konsole.

Wie oben bereits beschrieben ist, ist der axiale Abstand dieser Kontur zu einer Unterseite der Endscheibe in dem Kontaktpunkt minimal. Dies erlaubt bei geeigneter Geometrie der in der Vertiefung aufgenommenen Halterungsrippe die Realisierung eines definierten Kontaktpunkts zwischen Halterungsrippe und Vertiefung der Endscheibe, so dass dieser Kontaktpunkt einen definierten Drehpunkt zum Verkippen des Filterelements relativ zur Konsole bilden kann.

Bei einer weiteren bevorzugten Ausführungsform des erfindungsgemäßen Filterelements ist die Kontur wenigstens einer Rippe, vorzugsweise aller Rippen, der Endscheiben-Rippenstruktur gekrümmt ausgebildet. Auf diese Weise lässt sich eine konkave geometrische Formgebung realisieren, so dass im Zusammenspiel mit den an der Endscheiben-Halterung vorgesehene Halterungsrippen definierte Dreh- bzw. Kipppunkte erzeugt werden können, die besagtes "Aushebeln" des Filterelements aus seiner nominellen Montageposition ermöglicht, wenn das Filterelement von der Konsole demontiert werden soll.

Zur Realisierung eines vorteilhaften Dreh- bzw. Kipppunkts kann besagte Kontur einen radial inneren Konturabschnitt aufweisen, der radial nach außen in einen radial äußeren Konturabschnitt übergeht. Bei dieser Variante verläuft die Krümmung des radial inneren Konturabschnitts entgegengesetzt zur Krümmung des radial äußeren Konturabschnitts. Besonders bevorzugt kann der radiale innere Konturabschnitt von radial innen nach radial außen vom Filterkörper weg gekrümmt sein.

Bei einer anderen bevorzugten Ausführungsform verjüngt sich in dem Längsschnitt wenigstens eine Rippe von radial innen nach radial außen. Bevorzugt kann dies für mehrere, besonders bevorzugt für alle Rippen der Endscheiben-Rippenstruktur gelten.

Die Erfindung betrifft außerdem eine Filtereinrichtung zum Filtern eines Fluids, insbesondere einer Flüssigkeit. Die erfindungsgemäße Filtereinrichtung umfasst eine Konsole, die eine Konsole-Mittellängsachse sowie einen rohseitigen Zulauf und einen reinseitigen Ablauf aufweist. Eine Zulauföffnung des Zulaufs und eine Ablauföffnung des Ablaufs sind im montierten Zustand der Filtereinrichtung bei hängender Anordnung nach unten, zum Filterelement hin offen. Die Filtereinrichtung umfasst ferner ein Gehäuse, das lösbar an der Konsole befestigt ist und einen Aufnahmeraum umgibt. Das Gehäuse schließt im zusammengebauten Zustand der Filtereinrichtung nach unten an die Konsole an, sodass sich der Aufnahmeraum unterhalb der Konsole befindet. Des Weiteren umfasst die Filtereinrichtung ein voranstehend vorgestelltes, erfindungsgemäßes Filterelement. Die vorangehend erläuterten Vorteile des erfindungsgemäßen Filterelements übertragen sich daher auf die erfindungsgemäße Filtereinrichtung. Das Filterelement ist austauschbar im Aufnahmeraum der Filtereinrichtung angeordnet und trennt im Aufnahmeraum eine mit dem Zulauf fluidisch verbundene Rohseite von einer mit dem Ablauf fluidisch verbundenen Reinseite. Der Ablauf der Filtereinrichtung weist an der Konsole einen Aufnahmestutzen auf, der wiederum die Ablauföffnung umfasst und konzentrisch zur Konsole-Mittellängsachse angeordnet ist und außerdem die zentrale Scheibenöffnung der oberen Endscheibe des Filterelements durchsetzt.

Ferner ist eine Stutzendichtung vorgesehen, die den Aufnahmestutzen gegenüber der oberen Endscheibe dichtet. Am Aufnahmestutzen der Konsole ist eine ringförmige Endscheiben-Halterung mit einer Halterungsrippenstruktur zum Fixieren der Endscheiben-Rippenstruktur angeordnet.

Die Endscheiben-Rippenstruktur des Filterelements und die Endscheiben-Halterung der Filtereinrichtung sind so ausgebildet und aufeinander abgestimmt, dass das Filterelement bei am Aufnahmestutzen befestigtem Filterelement gegenüber der Konsole bis zu einem vorbestimmten Maximalwert um einen zwischen der Filterelement-Mittellängsachse und der Konsole-Mittellängsachse gebildeten Kippwinkel verkippt werden kann. Diese erfindungswesentliche Eigenschaft erleichtert, wie bereits oben erläutert, die Demontage des Filterelements von der Konsole.

Gemäß einer vorteilhaften Weiterbildung der erfindungsgemäßen Filtereinrichtung umfasst die Endscheiben-Halterung einen ringförmigen und eine Durchgangsöffnung einfassenden Grundkörper. Der Grundkörper weist eine sich entlang der axialen Richtung erstreckende Grundkörper-Mittellängsachse auf. Der Grundkörper ist in einer Körperebene senkrecht zur Grundkörper-Mittellängsachse angeordnet.

Der Grundkörper weist eine der oberen Endscheibe des Filterelements zugewandte Unterseite sowie eine von der oberen Endscheibe abgewandte Oberseite auf, die einander entlang der axialen Richtung gegenüberliegen. An einem die Oberseite mit der Unterseite verbindenden Innenumfang des Grundkörpers sind mehrere entlang der Umfangsrichtung im Abstand zueinander angeordnete und axial nach unten vom Grundkörper abstehende Halterungsrippen ausgebildet.

Gemäß einer vorteilhaften Weiterbildung ist wenigstens eine Halterungsrippe der Endscheiben-Halterung in einer zugeordneten Vertiefung der Endscheiben-Rippenstruktur aufgenommen und berührt diese innerhalb der Vertiefung in einer lokalen Kontaktzone.

Besonders bevorzugt ist die wenigstens eine Halterungsrippe beidseitig benachbart zur Kontaktzone im Abstand zur Vertiefung angeordnet, so dass wenigstens ein innerhalb der Kontaktzone angeordneter Kontaktpunkt zwischen der Vertiefung der Endscheiben-Rippenstruktur und der in der Vertiefung aufgenommenen Halterungsrippe einen Drehpunkt zum Verkippen des Filterelements gegenüber der Konsole ausbildet. Diese Eigenschaft unterstützt das oben erläuterte "Aushebeln" des Filterelements, da ein Freiheitsgrad für das Kippen des Filterelementes um den Drehpunkt geschaffen wird; denn die obere Endscheibe kann sich um den Drehpunkt drehen, bis ein radial ganz außenliegender Radius der Oberseite der oberen Endscheibe an die Unterseite der Endscheiben-Halterung stößt.

Besonders zweckmäßig kann eine von der Oberseite des Grundkörpers abgewandte Unterseite der Endscheiben-Halterung in dem Längsschnitt entlang der Konsolen-Mittellängsachse eine kurvenförmige Kontur aufweisen, deren axialer Abstand zur Körperebene des Grundkörpers in dem Kontaktpunkt maximal ist.

Besonders bevorzugt fallen in einem nominellen Montagezustand des Filterelements an der Konsole die Filterelement-Mittellängsachse und der Konsole-Mittellängsachse zusammen, so dass der Kippwinkel einen Null-Wert annimmt. Dies erlaubt einen optimalen nominalen Betrieb des Filterelements in einem an der Konsole montierten Zustand.

Gemäß einer weiteren vorteilhaften Weiterbildung ist zwischen jeweils zwei in Umfangsrichtung benachbarten Rippen der Endscheiben-Halterung eine Vertiefung vorgesehen. Bei dieser Weiterbildung weist in dem Längsschnitt entlang der Längsrichtung eine von der Oberseite des Grundkörpers abgewandte Unterseite der Vertiefung eine Kontur auf, deren axialer Abstand zur Oberseite des Grundkörpers von radial innen nach radial zunimmt.

Besonders zweckmäßig kann die Endscheiben-Halterung integral an der Konsole ausgeformt sein. Diese Variante ist mit besonders niedrigen Herstellungskosten verbunden. Alternativ dazu ist es aber auch denkbar, die Endscheiben-Halterung als gegenüber der Konsole separates Bauteil zu realisieren, welches lösbar, insbesondere mittels einer Schraubverbindung, an der Konsole befestigt ist.

Bei einer bevorzugten Ausführungsform der erfindungsgemäßen Filtereinrichtung verjüngt sich der Aufnahmestutzen nach unten, insbesondere konisch. Bei zweiteiliger Ausführung, das heißt wenn die Endscheiben-Halterung als separates Bauteil in die Konsole des Filters eingeschraubt wird, wird der an der Konsole nach unten abstehende, in die offene Endscheibe eingreifende Aufnahmestutzen konisch ausgeführt. Aufgrund der konische Form des Aufnahmestutzens kann die offene Endscheibe um einen im O-Ring angeordneten virtuellen Drehpunkt gekippt werden, ohne mit der Außenseite des Aufnahmestutzens zu kollidieren. Das maximal mögliche Kippspiel vergrößert sich durch die konische Form des Aufnahmestutzens deutlich. Es werden also zusätzliche Freiheitsgrade erzeugt, welche das Verkippen und somit das Aushebeln des Filterelements unterstützen und erleichtern, weil die zylindrische Innenfläche der offenen Endscheibe durch die konische Form des Aufnahmestutzens bei einer Verkippung des Filterelementes bis zu einem gewissen Winkel nicht mehr mit der Außenfläche des Aufnahmestutzens kollidiert. Dies erleichtert das Verkippen und somit das Aushebeln des Filterelements.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1a: in einer Teildarstellung und in einem Längsschnitt entlang der axialen Richtung ein Beispiel einer erfindungsgemäßen Filtereinrichtung, wobei sich das Filterelement in einer an der Konsole montierten Nominal-Position befindet, in welcher die Filtereinrichtung betrieben werden kann,
- Fig. 1b: die Filtereinrichtung der Figur 1a mit einem gegenüber der Konsole verkippten Filterelement, wie dies zu einem Zeitpunkt des "Aushebeins" des Filterelementes bei der Demontage des Filterelementes, der Fall ist
- Fig. 2: das Filterelement der Filtereinrichtung in separater, perspektivischer Darstellung,
- Fig. 3: die Endscheiben-Halterung der Filtereinrichtung in separater, perspektivischer Darstellung,
- Fig. 4: eine Detaildarstellung der Figur 1b im Bereich der Endscheiben-Halterung und der Endscheiben-Rippenstruktur,
- Fig. 5: eine in der Vertiefung der Konsolen-Halterung aufgenommene Rippe gemäß Figur 1a in einer Detaildarstellung.

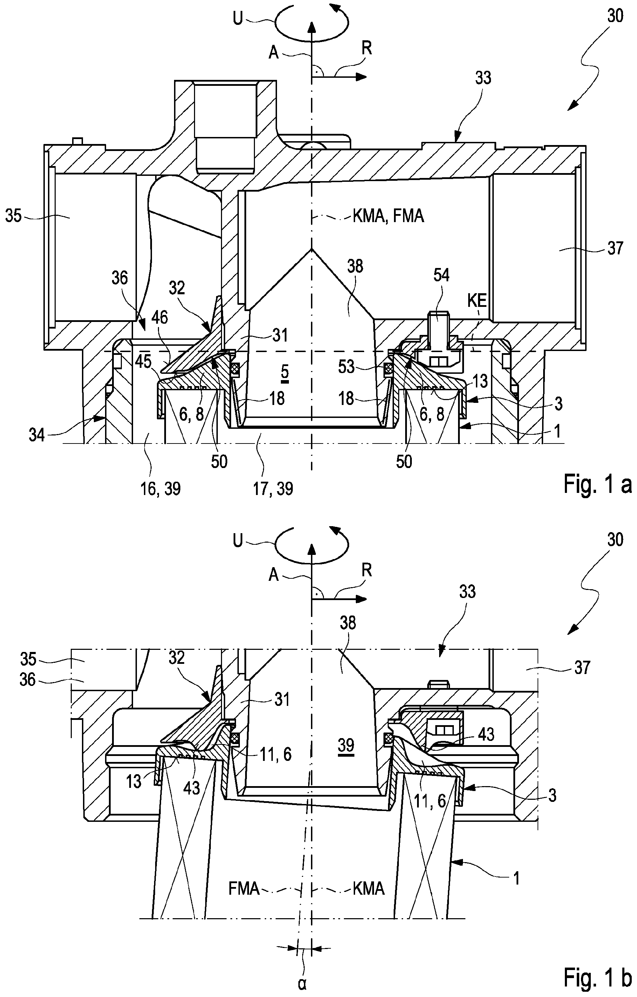

Die Figur 1a illustriert in einer Teildarstellung ein Beispiel einer erfindungsgemäßen Filtereinrichtung 30. Die Filtereinrichtung 30 umfasst eine Konsole 33, die eine Konsole-Mittellängsachse KMA, einen rohseitigen Zulauf 35 und einen reinseitigen Ablauf 37 aufweist. Eine Zulauföffnung 36 des Zulaufs 35 und eine Ablauföffnung 38 des Ablaufs 37 sind im montierten Zustand der Filtereinrichtung 30 nach unten offen. Im Beispielszenario wird das Filterelement von außen nach innen durchströmt. Alternativ kann das Filterelement von innen nach außen durchströmt werden.

Figur 1a zeigt einen Längsschnitt der Filtereinrichtung 30 entlang der Konsole-Mittellängsachse KMA. Eine axiale Richtung A der Filtereinrichtung 30 erstreckt sich entlang der Konsole-Mittellängsachse KMA. Eine radiale Richtung R erstreckt sich senkrecht zur axialen Richtung A von der Konsole-Mittellängsachse KMA weg. Ein Umfangsrichtung U läuft senkrecht sowohl zur axialen Richtung A als auch zur radialen Richtung R um die Konsole-Mittellängsachse KMA um.

Die Filtereinrichtung 30 umfasst ferner ein Gehäuse 34, das lösbar an der Konsole 33 befestigt ist und einen Aufnahmeraum 39 enthält. Das Gehäuse 34 schließt im zusammengebauten Zustand der Filtereinrichtung 30 nach unten an die Konsole 33 an, sodass sich der Aufnahmeraum 39 unterhalb der Konsole 33 befindet.

Der Ablauf der Filtereinrichtung 30 weist an der Konsole 33 einen Aufnahmestutzen 31 auf, der die Ablauföffnung 38 umfasst und der im Beispielszenario außerdem konzentrisch zur Konsole-Mittellängsachse KMA angeordnet ist. Weiterhin umfasst die Filtereinrichtung 30 ein erfindungsgemäßes Filterelement 1. Der Aufnahmestutzen 31 durchsetzt eine zentrale Scheibenöffnung 5 einer ringförmigen oberen Endscheibe 3 des Filterelements 1. Das Filterelement 1 ist austauschbar im Aufnahmeraum 39 der Filtereinrichtung 30 angeordnet und trennt im Aufnahmeraum 39 eine mit dem Zulauf 35 fluidisch verbundene Rohseite 16 von einer mit dem Ablauf 37 fluidisch verbundenen Reinseite 17. Gemäß Figur 1a ist an der Filtereinrichtung 30 außerdem eine Stutzendichtung 53 vorgesehen, die den Aufnahmestutzen 31 gegenüber der oberen Endscheibe 3 des Filterelements 1 dichtet. Mittels der Stutzendichtung 53 - typischerweise durch einen Dichtungsring gebildet - kann das Filterelement 1 an dem Aufnahmestutzen 31 befestigt werden, indem die zylindrische Innenseite der oberen Endscheibe 3 über die Stutzendichtung 53 bzw. den Dichtungsring gestreift wird. Die entstehenden Klemmkräfte schützen das Filterelement 1 vor einem schwerkraftbedingten Abgleiten nach unten. Diese Schutzwirkung kann verstärkt werden, indem im oberen Bereich der zylindrischen Innenfläche der oberen Endscheibe 3 ein radial nach innen abstehender, in Umfangsrichtung umlaufender Wulst angebracht wird, welcher das versehentliche "Übergleiten" der oberen Endscheibe über die Stutzendichtung 53 hinweg nach unten verhindert. Zudem ermöglicht ein derartiger, nach innen abstehender Wulst eine "haptische Kontrolle", sodass die das Filterelement wechselnde Person spüren kann, sobald das Filterelement korrekt installiert wurde. Dies ist der Fall, wenn der erhöhte Aufsteckwiderstand im Moment, wenn der Wulst die O-Ring-Dichtung übergleitet, ruckartig nachlässt.

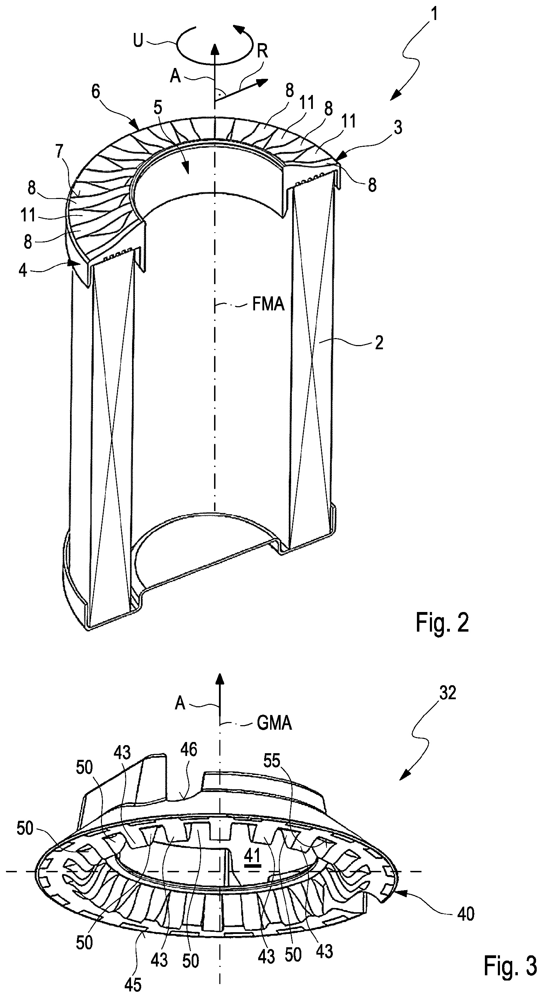

Die Figur 2 zeigt das Filterelement 1 in separater, perspektivischer Darstellung. Das erfindungsgemäßes Filterelement 1 umfasst demnach einen ringförmigen Filterkörper 2 aus Filtermaterial, der eine Filterelement-Mittellängsachse FMA aufweist und der zum Filtern des Fluids von diesem radial durchströmbar ist. Dieser Filterköper 2 kann aus plissiertem Filtermaterial, aus gewickeltem Filtermaterial, aus gesintertem Material oder aus einer sonstigen gängigen Form bestehen. Des Weiteren umfasst das Filterelement 1 eine ringförmige obere Endscheibe 3, die ein vom Filterkörper 2 abgewandtes oberes axiales Ende 4 des Filterelements 1 abdichtet und weiterhin eine zentrale Scheibenöffnung 5 aufweist. An der oberen Endscheibe 3 ist eine Endscheiben-Rippenstruktur 6 vorgesehen, mittels welcher das Filterelement 1 im montierten Zustand an einer am Aufnahmestutzen 31 vorgesehenen Endscheiben-Halterung 32 (vgl. hierzu Figur 1a) befestigt ist. Die Rippenstruktur 6 kann hierbei wie in Figur 2 integral an der oberen Endscheibe 3 ausgeformt sein, oder alternativ als separates Bauteil an eine standardmäßige Endscheibe, beispielsweise einer einfachen Blechendscheibe, welche bspw. ein U-Profil aufweist, mittels gängigem Fügeverfahren gefügt sein. Die Endscheiben-Halterung 32 kann integral an der Konsole 33 ausgeformt sein. Alternativ dazu ist es aber auch vorstellbar, dass die Endscheiben-Halterung 32 wie in Figur 1a gezeigt ein gegenüber der Konsole 33 separates Bauteil ist, welches lösbar, beispielsweise mittels einer in Figur 1a angedeuteten Schraubverbindung 54, an der Konsole 33 befestigt ist.

Wie Figur 2 veranschaulicht, ist die Endscheiben-Rippenstruktur 6 auf einer vom Filterkörper 2 abgewandten Oberseite 7 der oberen Endscheibe 3 angeordnet. Die Endscheiben-Rippenstruktur 6 umfasst mehrere in Umfangsrichtung U im Abstand zueinander angeordnete und jeweils axial nach oben von der Endscheibe 3 abstehende Rippen 8. Zwischen jeweils zwei in Umfangsrichtung U benachbarten Rippen 8 der Endscheiben-Rippenstruktur 6 ist jeweils eine Vertiefung 11 vorgesehen.

Die gemäß Figur 1a am Aufnahmestutzen 31 angeordnete Endscheiben-Halterung 32 ist in Figur 3 in separater Darstellung gezeigt. Demnach umfasst die Endscheiben-Halterung 32 einen ringförmigen und eine Durchgangsöffnung 41 einfassenden Grundkörper 40. Der Grundkörper 40 weist eine sich entlang der axialen Richtung A erstreckende Grundkörper-Mittellängsachse GMA auf. Der Grundkörper 40 ist in einer Körperebene KE (vgl. Figur 1a) senkrecht zur Grundkörper-Mittellängsachse GMA angeordnet. Weiterhin weist der Grundkörper 40 eine der oberen Endscheibe 3 des Filterelements 1 (vgl. Figur 1a) zugewandte Unterseite 45 sowie eine von der oberen Endscheibe 3 abgewandte Oberseite 46 auf. Die Unterseite 45 und die Oberseite 46 liegen einander in der axialen Richtung A gegenüber. Wie in Figur 1a durch eine mit dem Bezugszeichen18 bezeichnete Linie angedeutet, verjüngt sich der Grundkörper 40 zur Unterseite 45 hin konisch.

Gemäß Figur 3 sind an einem die Oberseite 46 mit der Unterseite 45 verbindenden Innenumfang 55 des Grundkörpers 40 entlang der Umfangsrichtung U mehrere im Abstand zueinander angeordneten und axial nach unten vom Grundkörper 40 abstehende Halterungsrippen 43 vorgesehen. Zwischen jeweils zwei in Umfangsrichtung U benachbarten Halterungsrippen 43 der Endscheiben-Halterung 32 ist eine Vertiefung 50 vorgesehen. Die konisch zulaufende Oberfläche zwischen der Oberseits 46 sowie der Unterseite 45 bewirkt zudem bei Anströmung der in Figur 3 dargestellten Endscheiben-Halterung eine sanfte Strömungsumlenkung. Die Endscheiben-Halterung übernimmt somit zusätzlich die Funktion einer Strömungsleiteinrichtung, welche positive Auswirkung auf die Strömungszustände im Innern des Filters aufweist (gezielte Strömungsführung, Vermeidung von Verwirbelungen).

Im Folgenden wird wieder auf die Darstellung der Figuren 1a und 1b Bezug genommen. Die Endscheiben-Rippenstruktur 6 des Filterelements 1 und die Endscheiben-Halterung 32 der Filtereinrichtung 30 sind demnach so aufeinander abgestimmt, dass das Filterelement 1 bei am Aufnahmestutzen 31 befestigtem Filterelement 1 gegenüber der Konsole 33 bis zu einem vorbestimmten Maximalwert um einen zwischen der Filterelement-Mittellängsachse FMA und der Konsole-Mittellängsachse KMA gebildeten Kippwinkel α verkippt werden kann.

In dem in Figur 1a gezeigten nominellen Montagezustand des Filterelements 1 an der Konsole 33 fallen die Filterelement-Mittellängsachse FMA und die Konsole-Mittellängsachse KMA zusammen, so dass der Kippwinkel α einen Null-Wert annimmt.

Demgegenüber zeigt die Figur 1b einen verkippten Zustand mit Kippwinkel α > 0. Die Figur 1b ist eine zu Figur 1a korrespondierende Darstellung, also eine Detaildarstellung des Längsschnitts der Figur 1a im Bereich der Endscheiben-Halterung und der Endscheiben-Rippenstruktur. Allerdings ist der gezeigte Schnitt gegenüber der Darstellung der Figur 1a in der Umfangsrichtung U um 7° verdreht, so dass in Figur 1b die Filtereinrichtung 30 - im Unterschied zum Schnitt der Figur 1a - durch eine Vertiefung 11 der Endscheiben-Rippenstruktur 6 und durch eine Halterungsrippe 43 eine der Endscheiben-Halterung 32 geschnitten ist. Demgegenüber ist Figur 1 durch eine Rippe 8 der Endscheiben-Rippenstruktur 6 und durch eine Vertiefung 50 der Endscheiben-Halterung 32 geschnitten.

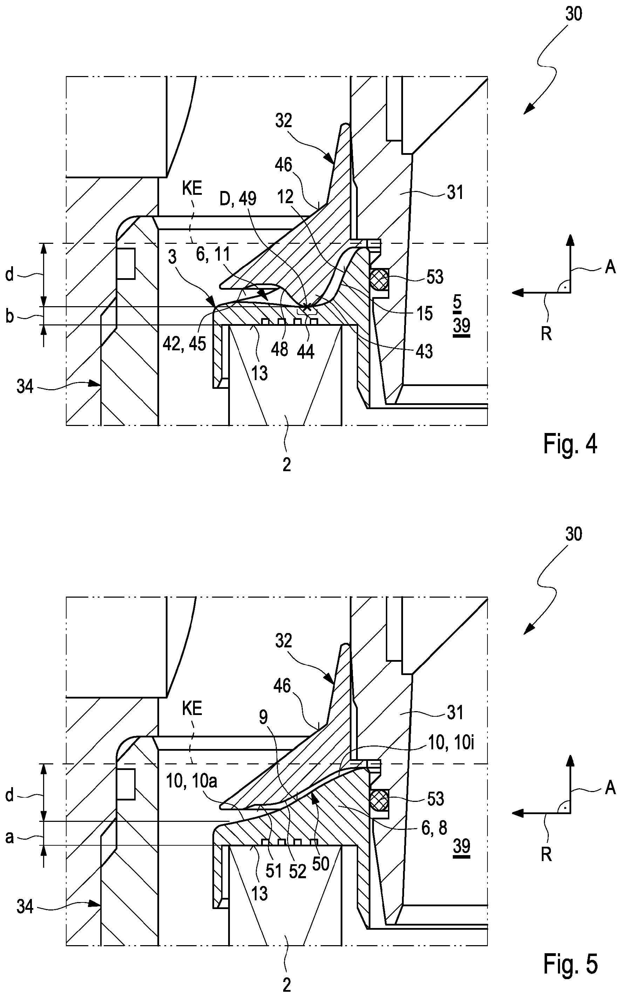

Die zu einem Verdrehen bzw. Verkippen des Filterelements 1 gegenüber der Konsole 33 erforderliche Ausgestaltung der Endscheiben-Rippenstruktur 6 mit den Rippen 8 und der Endscheiben-Halterung 32 mit den Halterungsrippen 43 wird im Folgenden anhand der Figur 4 erläutert, bei welcher es sich um eine Detaildarstellung der Figur 1b im Bereich der Endscheiben-Halterung 32 und der Endscheiben-Rippenstruktur 6 handelt.

Die Figur 4 veranschaulicht, dass in dem gezeigten Schnitt die Halterungsrippe 43 der Endscheiben-Halterung 32 in einer Kontaktzone 44 an einer zugeordneten Vertiefung 11 der Endscheiben-Rippenstruktur 6 anliegt. Die Halterungsrippe 43 der Endscheiben-Halterung 32 ist in einer zugeordneten Vertiefung 11 der Endscheiben-Rippenstruktur 6 aufgenommen und berührt diese innerhalb der Vertiefung 11 nur in einer lokalen Kontaktzone 44. Somit ist die Halterungsrippe 43 benachbart zur Kontaktzone 44 im Abstand zur Vertiefung 11 angeordnet, so dass in dem gezeigten Längsschnitt ein innerhalb der Kontaktzone 44 angeordneter Kontaktpunkt 49 zwischen Vertiefung 11 der Endscheiben-Rippenstruktur 6 und der Halterungsrippe 43 einen Drehpunkt D zum Verkippen des Filterelements 1 gegenüber der Konsole 33 ausbildet. Dadurch wird ein Freiheitsgrad für das Kippen des Filterelementes um den Drehpunkt D geschaffen wird; denn die obere Endscheibe 3 kann sich um den Drehpunkt D drehen, bis ein radial ganz außenliegender Radius der Oberseite der oberen Endscheibe 3 an die Unterseite der Endscheiben-Halterung 32 stößt.

In der in Figur 4 gezeigten Darstellung weist eine von der Oberseite 46 des Grundkörpers 40 abgewandte Unterseite 42 der Endscheiben-Halterung 32 bzw. Unterseite 45 des Grundkörpers 40 eine kurvenförmige Kontur 48 auf, deren axialer Abstand d zur Körperebene KE des Grundkörpers 40 in dem Kontaktpunkt 49 maximal ist.

Außerdem weist in dem in Figur 4 gezeigten Längsschnitt auch eine vom Filterkörper 2 abgewandte Oberseite 12 der Vertiefung 11 zwischen zwei Rippen 8 eine kurvenförmige Kontur 15 auf. Die Kontur 15 der einzelnen Vertiefungen 11 ist also wie gezeigt gekrümmt. In dem gezeigten Längsschnitt weisen die Vertiefungen 11 jeweils eine konvexe Geometrie auf. Dies erlaubt bei geeigneter Geometrie der in der Vertiefung 11 aufgenommenen Halterungsrippe 43 die Realisierung eines des oben erläuterten Kontaktpunkts 49 zwischen Halterungsrippe 43 und Vertiefung 11 der Endscheibe 3, so dass dieser Kontaktpunkt 49 den definierten Drehpunkt D zum Verkippen des Filterelements 1 relativ zur Konsole 33 ausbilden kann. Ein axialer Abstand b dieser Kontur 15 zur Unterseite 13 der Endscheibe 3 ist in dem Kontaktpunkt 49 minimal.

Um die zum Verkippen erforderliche Drehbewegung durchführen zu können, ist gemäß Figur 1b die Halterungsrippe 43 beidseitig benachbart zur Kontaktzone 44 im Abstand zur Endscheiben-Halterung 32 angeordnet, so dass die Kontaktzone bzw. der Kontaktpunkt 49 zum Verkippen des Filterelements 1 gegenüber der Konsole 33 erforderlichen Drehpunkt D ausbilden kann.

Zudem ist von Bedeutung, dass im radial äußersten Bereich zwischen Unterseite 42 der Endscheiben-Halterung und der Oberseite der offenen Endscheibe ein Spalt besteht. Dieser Spalt "d" wird benötigt, um den Freiheitsgrad für das Kippen des Filterelementes um den Drehpunkt D zu schaffen. Dieser Spalt ermöglicht das Kippen des Filterelementes, da sich die offene Endscheibe in Figur 4 durch den besagten Abstand im Uhrzeigersinn um den Drehpunkt D drehen kann, bis der radial ganz außenliegende Radius der Oberseite der offenen Endscheibe an die Unterseite 42 der Endscheiben-Halterung stößt.

Im Folgenden wird auf Figur 5 Bezug genommen, welche die in der Vertiefung 50 der Konsolen-Halterung 32 aufgenommene Rippe 8 gemäß Figur 1a in einer Detaildarstellung zeigt.

Gemäß Figur 5 weist eine vom Filterkörper 3 abgewandte Oberseite 9 der Rippe 8 jeweils eine Kontur 10 auf, deren axialer Abstand a zur Unterseite 13 der oberen Endscheibe 3 von radial innen nach radial außen abnimmt. Die Kontur 10 weist im Beispiel einen radial inneren Konturabschnitt 10.i auf, der von radial innen nach außen in einen radial äußeren Konturabschnitt 10.a übergeht. Bevorzugt verläuft eine Krümmung des radial inneren Konturabschnitts 10.i wie in Figur 5 gezeigt entgegengesetzt, also mit entgegengesetztem Vorzeichen, zur Krümmung des radial äußeren Konturabschnitts 10.a. Die Kontur 10 verläuft also so, dass die Rippe 8 im radial inneren Konturabschnitts 10.i eine konvexe Geometrie und im radial äußeren Konturabschnitts 10.a eine konkave Geometrie aufweist. Dabei ist der radial innere Konturabschnitts 10.i wie in Figur 5 exemplarisch dargestellt von radial innen nach radial außen vom Filterkörper 2 weg gekrümmt ausgebildet.

Eine von der Oberseite 46 des Grundkörpers 40 abgewandte Unterseite 51 der Vertiefung 50 weist eine Kontur 52 auf, deren axialer Abstand d zur Körperebene KE des Grundkörpers 40 von radial innen nach radial außen zunimmt. Auch die anhand der Figur 5 erläuterte Geometrie der Vertiefung 50 und der Rippe 8 unterstützt ein Verkippen des Filterelements 1 gegenüber der Konsole 33.

## Patentansprüche

1. Filterelement (1) für eine Filtereinrichtung (30) zum Filtern eines Fluids,
- mit einem ringförmigen Filterkörper (2) aus Filtermaterial, der eine Filterelement-Mittellängsachse (FMA) aufweist und der zum Filtern eines Fluids von dieser radial durchströmbar ist,
- mit einer, vorzugsweise ringförmigen, oberen Endscheibe (3), die ein vom Filterkörper (2) abgewandtes oberes axiales Ende (4) des Filterelements (1) abdichtet und die eine zentrale Scheibenöffnung (5) aufweist, welche von einem Aufnahmestutzen (31) der Filtereinrichtung (30) durchsetzbar ist,
- wobei an der oberen Endscheibe (3) eine Endscheiben-Rippenstruktur (6) vorgesehen ist, mittels welcher das Filterelement (1) im montierten Zustand an einer am Aufnahmestutzen (31) vorgesehenen Endscheiben-Halterung (32) anbringbar ist,
- wobei die Endscheiben-Rippenstruktur (6) auf einer vom Filterkörper (2) abgewandten Oberseite (7) der oberen Endscheibe (3) angeordnet ist und mehrere in Umfangsrichtung (U) im Abstand zueinander angeordnete und jeweils axial nach oben von der Endscheibe (3) abstehende Rippen (8) umfasst,
**dadurch gekennzeichnet, dass**
- zwischen jeweils zwei in Umfangsrichtung (U) des Filterelements (1) benachbarten Rippen (8) der Endscheiben-Rippenstruktur (6) eine Vertiefung (11) vorgesehen ist, und
- in dem Längsschnitt eine von der Endscheibe (3) abgewandte Oberseite (12) der Vertiefung (11) eine kurvenförmige Kontur (15) aufweist, deren axialer Abstand (b) zu einer Unterseite (13) der Endscheibe (3) in einem Kontaktpunkt (49) minimal ist.

2. Filterelement nach Anspruch 1,
**dadurch gekennzeichnet, dass**
in einem Längsschnitt entlang der Filterelement-Mittellängsachse (FMA) eine von der Unterseite (13) der Endscheibe (3) abgewandte Oberseite (9) wenigstens einer, vorzugsweise aller, der Rippen (8) eine Kontur (10) aufweist, deren axialer Abstand (a) zur Unterseite (13) von radial innen nach radial außen abnimmt.

3. Filterelement nach Anspruch 2,
**dadurch gekennzeichnet, dass**
die Kontur (10) wenigstens einer, vorzugsweise aller, der Rippen (8) zumindest abschnittsweise gekrümmt ausgebildet ist.

4. Filterelement nach Anspruch 3,
**dadurch gekennzeichnet, dass**
- die Kontur (10) einen radial inneren Konturabschnitt (10.i) aufweist, der radial nach außen in einen radial äußeren Konturabschnitt (10.a) übergeht,
- die Krümmung des radial inneren Konturabschnitts (10.i) entgegengesetzt zur Krümmung des radial äußeren Konturabschnitts (10.a) ist.

5. Filterelement nach Anspruch 4,
**dadurch gekennzeichnet, dass**
radial innere Konturabschnitts (10.i) von radial innen nach radial außen vom Filterkörper (2) weg gekrümmt ist.

6. Filtereinrichtung (30) zum Filtern eines Fluids, insbesondere einer Flüssigkeit,
- mit einer Konsole (33), die eine Konsole-Mittellängsachse (KMA) sowie einen rohseitigen Zulauf (35) und einen reinseitigen Ablauf (37) aufweist, wobei eine Zulauföffnung (36) des Zulaufs (35) und eine Ablauföffnung (38) des Ablaufs (37) im montierten Zustand der Filtereinrichtung (30) nach unten offen sind,
- mit einem Gehäuse (34), das lösbar an der Konsole (33) befestigt ist und einen Aufnahmeraum enthält, wobei das Gehäuse (34) im montierten Zustand der Filtereinrichtung (30) nach unten an die Konsole (33) anschließt, sodass sich der Aufnahmeraum (39) unterhalb der Konsole (33) befindet, wobei die Anordnung ebenfalls um 180° oder einen sonstigen beliebigen Winkel gedreht werden kann, sodass die Konsole unten angeordnet ist und der Aufnahmeraum somit nach oben zeigt,
- mit einem Filterelement (1) nach einem der vorhergehenden Ansprüche, das austauschbar im Aufnahmeraum (39) angeordnet ist und darin eine mit dem Zulauf (35) fluidisch verbundene Rohseite (16) von einer mit dem Ablauf (37) fluidisch verbundenen Reinseite (17) trennt,
- wobei der Ablauf (37) an der Konsole (33) einen Zu-/Aufnahmestutzen (31) aufweist, der die Ablauföffnung (38) aufweist und der die zentrale Scheibenöffnung (5) der oberen Endscheibe (3) des Filterelements (1) durchsetzt,
- wobei eine Stutzendichtung (53) vorgesehen ist, die den Aufnahmestutzen (31) gegenüber der oberen Endscheibe (3) dichtet,
- wobei am Aufnahmestutzen (31) der Konsole (33) eine ringförmige Endscheiben-Halterung (32) mit einer Halterungsrippenstruktur (43) zum Fixieren der Endscheiben-Rippenstruktur (6) angeordnet ist,
- wobei der Aufnahmestutzen nach unten hin konisch zuläuft, um eine Kippbewegung der zylindrischen Innenfläche der offenen Endscheibe zu ermöglichen,
- wobei die Endscheiben-Rippenstruktur (6) und die Endscheiben-Halterung (32) so ausgebildet und aufeinander abgestimmt sind, dass das Filterelement (1) bei am Aufnahmestutzen (31) befestigtem Filterelement (1) gegenüber der Konsole (33) bis zu einem vorbestimmten Maximalwert um einen zwischen der Filterelement-Mittellängsachse (FMA) und der Konsole-Mittellängsachse (KMA) gebildeten Kippwinkel (α) verkippbar ist.

7. Filtereinrichtung nach Anspruch 6,
**dadurch gekennzeichnet, dass**
- die Endscheiben-Halterung (32) einen, vorzugsweise ringförmigen, eine Durchgangsöffnung (41) einfassenden Grundkörper (40) aufweist, der eine sich entlang der axialen Richtung (A) erstreckende Grundkörper-Mittellängsachse (GMA) aufweist, wobei der Grundkörper (40) in einer Körperebene (KE) senkrecht zur Grundkörper-Mittellängsachse (GMA) angeordnet ist und eine der oberen Endscheibe (3) des Filterelements (1) zugewandte Unterseite (45) sowie eine von der oberen Endscheibe (3) abgewandte Oberseite (46) aufweist, die einander entlang der axialen Richtung (A) gegenüberliegen,
- an einem die Oberseite (46) mit der Unterseite (45) verbindenden Innenumfang (55) des Grundkörpers (40) mehrere entlang der Umfangsrichtung (U) im Abstand zueinander angeordneten und axial nach unten vom Grundkörper abstehende Halterungsrippen (43) ausgebildet, insbesondere integral ausgeformt, sind.

8. Filtereinrichtung nach Anspruch 7,
**dadurch gekennzeichnet, dass**
wenigstens eine Halterungsrippe (43) der Endscheiben-Halterung (32) in einer zugeordneten Vertiefung (11) der Endscheiben-Rippenstruktur (6) aufgenommen ist und diese innerhalb der Vertiefung (11) in einer lokalen Kontaktzone (44) berührt.

9. Filtereinrichtung nach Anspruch 7 oder 8,
**dadurch gekennzeichnet, dass**
die wenigstens eine Halterungsrippe (43) beidseitig benachbart zur Kontaktzone (44) im Abstand zur Vertiefung (11) angeordnet ist, so dass ein innerhalb der Kontaktzone (44) angeordneter Kontaktpunkt (49) zwischen der Vertiefung (11) der Endscheiben-Rippenstruktur (6) und der in dieser Vertiefung (11) aufgenommenen Halterungsrippe (43) einen Drehpunkt (D) zum Verkippen des Filterelements (1) gegenüber der Konsole (33) ausbildet.

10. Filtereinrichtung nach einem der Ansprüche 7 bis 9,
**dadurch gekennzeichnet, dass**
eine von der Oberseite (46) des Grundkörpers (40) abgewandte Unterseite (42) der Endscheiben-Halterung (32) in einem Längsschnitt entlang der Konsolen-Mittellängsachse (KMA) eine kurvenförmige Kontur (48) aufweist, deren axialer Abstand (d) zur Körperebene (KE) des Grundkörpers (40) in dem Kontaktpunkt (49), maximal ist.

11. Filtereinrichtung nach eine der Ansprüche 7 bis 10,
**dadurch gekennzeichnet, dass**
in einem nominellen Montagezustand des Filterelements (1) an der Konsole (33) die Filterelement-Mittellängsachse (FMA) und die Konsolen-Mittellängsachse (KMA) zusammenfallen, so dass der Kippwinkel (α) einen Null-Wert annimmt.

12. Filtereinrichtung nach einem der Ansprüche 6 bis 11,
**dadurch gekennzeichnet, dass**
- zwischen jeweils zwei in Umfangsrichtung (U) benachbarten Halterungsrippen (43) der Endscheiben-Halterung (32) eine Vertiefung (50) vorgesehen ist,
- in dem Längsschnitt eine von der Oberseite (46) des Grundkörpers (40) abgewandte Unterseite (51) der Vertiefung (50) eine Kontur (52) aufweist, deren axialer Abstand (d) zur Körperebene (KE) des Grundkörpers (40) von radial innen nach radial außen, zunimmt.

13. Filtereinrichtung nach einem der Ansprüche 6 bis 12,
**dadurch gekennzeichnet, dass**
- die Endscheiben-Halterung (32) integral an der Konsole (33) ausgeformt ist; oder dass
- die Endscheiben-Halterung (32) gegenüber der Konsole (33) ein separates Bauteil ist, welches lösbar, vorzugsweise mittels einer Schraubverbindung an der Konsole (33) befestigt ist.

14. Filtereinrichtung nach einem der Ansprüche 7 bis 13,
**dadurch gekennzeichnet, dass**
sich ein Außenumfang des Aufnahmestutzens (31) nach unten hin konisch verjüngt.

## Claims

1. Filter element (1) for a filter apparatus (30) for filtering a fluid,
- with an annular filter body (2) made of filter material, which has a filter element central longitudinal axis (FMA) and through which a fluid can flow radially in order to filter said fluid,
- with a, preferably annular, upper end disc (3) which seals an upper axial end (4) of the filter element (1) facing away from the filter body (2) and which has a central disc opening (5) through which a receiving nozzle (31) of the filter apparatus (30) can pass,
- wherein on the upper end disc (3) an end disc rib structure (6) is provided, by means of which the filter element (1) in the mounted state can be attached to an end disc holder (32) provided on the receiving nozzle (31),
- wherein the end disc rib structure (6) is arranged on an upper side (7) of the upper end disc (3) facing away from the filter body (2) and comprises multiple ribs (8) arranged at a distance from one another in the circumferential direction (U) and each projecting axially upwards from the end disc (3),
**characterized in that**
- a recess (11) is provided between in each case two ribs (8) of the end disc rib structure (6) which are adjacent in the circumferential direction (U) of the filter element (1), and
- in the longitudinal section, an upper side (12) of the recess (11) facing away from the end disc (3) has a curved contour (15), the axial distance (b) of which from an underside (13) of the end disc (3) is minimal at a contact point (49).

2. Filter element according to claim 1,
**characterized in that**
in a longitudinal section along the filter element central longitudinal axis (FMA), an upper side (9), facing away from the underside (13) of the end disc (3), of at least one, preferably all, of the ribs (8) has a contour (10) whose axial distance (a) from the underside (13) decreases from radially inside to radially outside.

3. Filter element according to claim 2,
**characterized in that**
the contour (10) of at least one, preferably all, of the ribs (8) is curved at least in sections.

4. Filter element according to claim 3,
**characterized in that**
- the contour (10) has a radially inner contour section (10.i) which merges radially outwards into a radially outer contour section (10.a),
- the curvature of the radially inner contour section (10.i) is opposite to the curvature of the radially outer contour section (10.a).

5. Filter element according to claim 4,
**characterized in that**
radially inner contour section (10.i) is curved away from the filter body (2) from radially inside to radially outside.

6. filter apparatus (30) for filtering a fluid, in particular a liquid,
- with a bracket (33) which has a bracket central longitudinal axis (KMA) and an inlet (35) on the raw side and an outlet (37) on the clean side, wherein an inlet opening (36) of the inlet (35) and an outlet opening (38) of the outlet (37) are open at the bottom in the assembled state of the filter apparatus (30),
- with a housing (34) which can be fastened detachably to the bracket (33) and contains a receiving space, wherein the housing (34) adjoins the bracket (33) at the bottom in the assembled state of the filter apparatus (30), such that the receiving space (39) is located below the bracket (33), wherein the arrangement can also be rotated through 180° or any other desired angle, such that the bracket is arranged at the bottom and the receiving space thus points upwards,
- with a filter element (1) according to any one of the preceding claims, which is arranged interchangeably in the receiving space (39) and separates therein a raw side (16), which is fluidically connected to the inlet (35), from a clean side (17), which is fluidically connected to the outlet (37),
- wherein the outlet (37) on the bracket (33) has an inlet/receiving nozzle (31) which has the outlet opening (38) and which passes through the central disc opening (5) of the upper end disc (3) of the filter element (1),
- wherein a nozzle seal (53) is provided, which seals the receiving nozzle (31) with respect to the upper end disc (3),
- wherein an annular end disc holder (32) with a retaining rib structure (43) for fixing the end disc rib structure (6) is arranged on the receiving nozzle (31) of the bracket (33),
- wherein the receiving nozzle tapers downwardly to allow a tilting movement of the cylindrical inner surface of the open end disc,
- wherein the end disc rib structure (6) and the end disc holder (32) are designed and matched to one another such that the filter element (1) can be tilted relative to the bracket (33) up to a predetermined maximum value by a tilt angle (α) formed between the filter element central longitudinal axis (FMA) and the bracket central longitudinal axis (KMA) when the filter element (1) is fastened to the receiving nozzle (31).

7. Filter apparatus according to claim 6,
**characterized in that**
- the end cap holder (32) has a, preferably annular, base body (40) which encloses a through-opening (41) and which has a base body central longitudinal axis (GMA) extending along the axial direction (A), wherein the base body (40) is arranged in a body plane (KE) perpendicular to the base body central longitudinal axis (GMA) and has an underside (45) facing the upper end disc (3) of the filter element (1) and an upper side (46) facing away from the upper end disc (3), which are opposite one another along the axial direction (A),
- on an inner circumference (55) of the base body (40) connecting the upper side (46) to the underside (45), multiple retaining ribs (43) arranged at a distance from one another along the circumferential direction (U) and projecting axially downwards from the base body are formed, in particular integrally molded.

8. Filter apparatus according to claim 7,
**characterized in that**
at least one retaining rib (43) of the end disc holder (32) is received in an associated recess (11) of the end disc rib structure (6) and contacts the latter within the recess (11) in a local contact zone (44).

9. Filter apparatus according to claim 7 or 8,
**characterized in that**
the at least one retaining rib (43) is arranged on both sides adjacent to the contact zone (44) at a distance from the recess (11), so that a contact point (49) arranged within the contact zone (44) between the recess (11) of the end disc rib structure (6) and the retaining rib (43) received in this recess (11) forms a pivot point (D) for tilting the filter element (1) relative to the bracket (33).

10. Filter apparatus according to any one of claims 7 to 9,
**characterized in that**
an underside (42) of the end disc holder (32) facing away from the upper side (46) of the base body (40) has, in a longitudinal section along the bracket central longitudinal axis (KMA), a curved contour (48) whose axial distance (d) from the body plane (KE) of the base body (40) is at a maximum at the contact point (49).

11. Filter apparatus according to any one of claims 7 to 10,
**characterized in that**
when the filter element (1) is in a nominal assembled state on the bracket (33), the filter element central longitudinal axis (FMA) and the bracket central longitudinal axis (KMA) coincide, so that the tilt angle (α) assumes a zero value.

12. Filter apparatus according to any one of claims 6 to 11,
**characterized in that**
- a recess (50) is provided between in each case two adjacent retaining ribs (43) of the end disc holder (32) in the circumferential direction (U),
- in the longitudinal section, an underside (51) of the recess (50) facing away from the upper side (46) of the base body (40) has a contour (52) whose axial distance (d) from the body plane (KE) of the base body (40) increases from radially inside to radially outside.

13. filter apparatus according to any one of claims 6 to 12,
**characterized in that**
- the end disc holder (32) is integrally formed on the bracket (33); or **in that**
- the end disc holder (32) is a separate component from the bracket (33), and is detachably fastened to the bracket (33), preferably by means of a screw connection.

14. Filter apparatus according to any one of claims 7 to 13,
**characterized in that**
an outer circumference of the receiving nozzle (31) tapers conically towards the bottom.

## Revendications

1. Élément filtrant (1) pour un appareil de filtration (30) destiné à la filtration d'un fluide,
- avec un corps annulaire (2) de filtre, à base de matière filtrante, qui présente un axe longitudinal central (FMA) d'élément filtrant et qui, pour la filtration d'un fluide, peut être traversé radialement par celui-ci,
- avec un disque d'extrémité supérieure (3), de préférence annulaire, qui étanchéifie une extrémité axiale supérieure (4) de l'élément filtrant (1) opposée au corps (2) de filtre et qui présente une ouverture (5) de disque centrale qui peut être pénétrée par une tubulure de réception (31) de l'appareil de filtration (30),
- dans lequel est prévue sur le disque d'extrémité supérieur (3) une structure nervurée (6) de disque d'extrémité au moyen de laquelle l'élément filtrant (1) peut être appliqué à l'état monté sur un support (32) de disque d'extrémité prévu sur la tubulure de réception (31),
- dans lequel la structure nervurée (6) de disque d'extrémité est disposée sur une face supérieure (7) du disque d'extrémité supérieure (3) opposée au corps (2) de filtre et comprend plusieurs nervures (8) disposées à distance les unes des autres dans la direction périphérique (U) et s'étendant chacune axialement vers le haut à partir du disque d'extrémité (3), **caractérisé en ce que**
- une cavité (11) est prévue entre chaque paire de nervures (8) voisines dans la direction périphérique (U) de l'élément filtrant (1) de la structure nervurée de disque d'extrémité, et
- une face supérieure (12) de la cavité (11) opposée au disque d'extrémité (3) présente dans la coupe longitudinale un contour curviligne (15) dont la distance axiale (b) par rapport à une face inférieure (13) du disque d'extrémité (3) est minimale en un point de contact (49).

2. Élément filtrant selon la revendication 1,
**caractérisé en ce que**
une face supérieure (9) opposée à la face inférieure (13) de disque d'extrémité (3) présente dans une coupe longitudinale le long de l'axe longitudinal central (FMA) d'élément filtrant un contour (10) d'au moins une, de préférence de la totalité, des nervures (8) dont la distance axiale (a) par rapport à la face inférieure (13) diminue de radialement intérieur vers radialement extérieur.

3. Élément filtrant selon la revendication 2,
**caractérisé en ce que**
le contour (10) d'au moins une, de préférence de la totalité des nervures (8) est courbé au moins par sections.

4. Élément filtrant selon la revendication 3,
**caractérisé en ce que**
- le contour (10) présente un segment de contour radialement intérieur (10.i) qui se transforme radialement vers l'extérieur en un segment de contour radialement extérieur (10.a),
- la courbure du segment de contour radialement intérieur (10.i) est opposée à la courbure du segment de contour radialement extérieur (10.a).

5. Élément filtrant selon la revendication 4,
**caractérisé en ce que**
le segment de contour radialement intérieur (10.i) est courbé en s'éloignant du corps (2) de filtre de radialement intérieur vers radialement extérieur.

6. Appareil de filtration (30) pour la filtration d'un fluide, en particulier d'un liquide,
- avec une console (33) qui présente un axe longitudinal central (KMA) de console ainsi qu'une entrée (35) du côté brut et une sortie (37) du côté propre, dans lequel un orifice d'entrée (36) de l'entrée (35) et un orifice de sortie (38) de la sortie (37) sont ouverts vers le bas à l'état monté de l'appareil de filtration (30),
- avec un boîtier (34) qui est fixé de manière amovible à la console (33) et contient une chambre de réception, dans lequel le boîtier (34) se raccorde vers le bas à la console (33) à l'état monté de l'appareil de filtration (30), de sorte que la chambre de réception (39) se trouve au-dessous de la console (33), dans lequel l'ensemble peut également être tourné de 180° ou selon un autre angle quelconque de telle manière que la console soit disposée en bas et que la chambre réceptrice soit ainsi orientée vers le haut,
- avec un élément filtrant (1) selon l'une quelconque des revendications précédentes, qui est disposé de manière interchangeable dans la chambre de réception (39) et y sépare un côté avant brut (16) en connexion fluidique avec l'entrée (35) d'un côté propre (17) en connexion fluidique avec la sortie (37),
- dans lequel la sortie (37) présente sur la console (33) une tubulure d'arrivée/de réception (31) qui présente l'orifice de sortie (38) et pénètre dans l'orifice central (5) de disque du disque d'extrémité supérieure (3) de l'élément filtrant (1),
- dans lequel un joint (53) de tubulure est prévu, qui étanchéifie la tubulure de réception (31) par rapport au disque d'extrémité supérieure (3),
- dans lequel un support annulaire (32) de disque d'extrémité, avec une structure nervurée (43) de retenue, est disposé sur la tubulure de réception (31) de la console (33) pour fixer la structure nervurée (6) de disque d'extrémité,
- dans lequel la tubulure de réception se rétrécit en cône vers le bas pour permettre un mouvement de basculement de la surface interne cylindrique du disque d'extrémité ouvert,
- dans lequel la structure nervurée (6) de disque d'extrémité et le support (32) de disque d'extrémité sont configurés et adaptés l'un à l'autre de sorte que l'élément filtrant (1), lorsque l'élément filtrant (1) est fixé à la tubulure de réception (31), peut être basculé par rapport à la console (33) jusqu'à une valeur maximale prédéterminée selon un angle de basculement (α) formé entre l'axe longitudinal central (FMA) d'élément filtrant et l'axe longitudinal central (KMA) de console.

7. Appareil de filtration selon la revendication 6,
**caractérisé en ce que**
- le support (32) de disque d'extrémité présente un corps de base (40), de préférence annulaire, entourant un orifice de passage (41), qui présente un axe longitudinal central (GMA) de corps de base s'étendant le long de la direction axiale (A), dans lequel le corps de base (40) est disposé dans un plan de corps (KE) perpendiculairement à l'axe longitudinal central (GMA) de corps de base et présente une face inférieure (45) tournée vers le disque d'extrémité supérieure (3) de l'élément filtrant (1), ainsi qu'une face supérieure (46) opposée au disque d'extrémité supérieure (3), qui se font face le long de la direction axiale (A),
- plusieurs nervures de retenue (43) disposées à distance les unes des autres le long de la direction périphérique (U) et s'étendant axialement vers le bas à partir du corps de base sont formées, en particulier intégralement, sur une périphérie interne (55) du corps de base (40) reliant la face supérieure (46) à la face inférieure (45).

8. Appareil de filtration selon la revendication 7,
**caractérisé en ce que**
au moins une nervure de retenue (43) du support (32) de disque d'extrémité est reçue dans une cavité correspondante (11) de la structure nervurée (6) de disque d'extrémité et est en contact avec celle-ci à l'intérieur de la cavité (11) dans une zone de contact local (44).

9. Appareil de filtration selon la revendication 7 ou 8,
**caractérisé en ce que**
ladite au moins une nervure de retenue (43) est disposée des deux côtés à côté de la zone de contact (44) à distance de la cavité (11), de sorte qu'un point de contact (49) disposé à l'intérieur de la zone de contact (44) forme, entre la cavité (11) de la structure nervurée (6) de disque d'extrémité et la nervure de retenue (43) logée dans cette cavité (11), un point de pivot (D) pour l'inclinaison de l'élément filtrant (1) par rapport à la console (33).

10. Appareil de filtration selon l'une quelconque des revendications 7 à 9,
**caractérisé en ce que**
une face inférieure (42) du support (32) de disque d'extrémité, opposée à la face supérieure (46) du corps de base (40), présente dans une coupe longitudinale le long de l'axe longitudinal central (KMA) de console un contour curviligne (48) dont la distance axiale (d) par rapport au plan de corps (KE) du corps de base (40) est maximale au point de contact (49).

11. Appareil de filtration selon l'une quelconque des revendications 7 à 10, **caractérisé en ce que**
dans un état de montage nominal de l'élément filtrant (1) sur la console (33), l'axe longitudinal central (FMA) d'élément filtrant et l'axe longitudinal central (KMA) de console coïncident de sorte que l'angle d'inclinaison (α) prend une valeur nulle.

12. Appareil de filtration selon l'une quelconque des revendications 6 à 11,
**caractérisé en ce que**
- une cavité (50) est prévue entre chaque paire de nervures de retenue (43) voisines dans la direction circonférentielle (U) du support (32) de disque d'extrémité,
- dans la coupe longitudinale, une face inférieure (51) de la cavité (50), opposée à la face supérieure (46) du corps de base (40), présente un contour (52) dont la distance axiale (d) par rapport au plan de corps (KE) du corps de base (40) augmente de radialement intérieur vers radialement extérieur.

13. Appareil de filtration selon l'une quelconque des revendications 6 à 12,
**caractérisé en ce que**
- le support (32) de disque d'extrémité est formé d'un seul tenant avec la console (33) ; ou **en ce que**
- le support (32) de disque d'extrémité est un composant distinct de la console (33) qui est fixé de manière amovible à la console (33), de préférence au moyen d'un assemblage par vis.

14. Appareil de filtration selon l'une quelconque des revendications 7 à 13,
**caractérisé en ce que**
une périphérie extérieure de la tubulure de réception (31) se rétrécit en cône vers le bas.
